Europäisches Patentamt

**European Patent Office**

**Office européen des brevets**

(11) Veröffentlichungsnummer: **0 023 553**
A1

# EUROPÄISCHE PATENTANMELDUNG

(21) Anmeldenummer: 80103339.0

(22) Anmeldetag: **14.06.80**

(51) Int. Cl.³: **C 08 J 9/22,** C 04 B 21/08, C 04 B 31/30 // (C08J9/22, C08F12/08)

(30) Priorität: **21.07.79 DE 2929629**

(43) Veröffentlichungstag der Anmeldung: **11.02.81 Patentblatt 81/6**

(84) Benannte Vertragsstaaten: **AT BE CH FR GB IT LI LU NL SE**

(71) Anmelder: **Kalkwerk Mathis GmbH & Co., D-7801 Merdingen (DE)**

(72) Erfinder: **Mathis, Paul, Waldallee 46, D-7800 Freiburg (DE)**
Erfinder: **Zimmerer, Wilhelm, Hohkelchweg 2, D-7816 Münstertal (DE)**

(74) Vertreter: **Patentanwälte Dipl.-Ing. Hans Schmitt Dipl.-Ing. Wolfgang Maucher, Dreikönigstrasse 13, D-7800 Freiburg i.Br. (DE)**

(54) Verfahren zum Aufschäumen von schäumfähigem Polystyrol-Granulat und Verfahren zur Herstellung eines Bausteines.

(57) Ein Verfahren zum Aufschäumen von schäumfähigem Polystyrol-Granulat zu aufgeschäumten Polystyrol-Granulat besteht darin, daß das Granulat mit gebranntem Kalk gemischt und dann der Kalk mit Wasser abgelöscht wird. Die durch das Löschen des Kalkes entstehende Wärme und ein Teil des zum Löschen zugegebenen Wassers reagieren dabei mit dem schäumfähigen Polystyrol-Granulat. Die entstehende Mischung kann entweder den Bestandteil von Baustoff oder Baumaterialien bilden oder durch Sieben in ihre Bestandteile zerlegt werden.

EP 0 023 553 A1

ACTORUM AG

PATENTANWÄLTE
DIPL.-ING. H. SCHMITT
DIPL.-ING. W. MAUCHER

78 FREIBURG I. BR.
DREIKÖNIGSTR. 13
TELEFON: (07 61) 7 07 73
7 07 74

13. Juni 1980

0023553

- 1 -

Firma

Kalkwerk Mathis GmbH & Co.

7801 Merdingen

UNSERE AKTE · BITTE STETS ANGEBEN!

E 80 279 MR

Verfahren zum Aufschäumen von schäumfähigem
Polystyrol-Granulat

BEZEICHNUNG GEÄNDERT
siehe Titelseite

Die Erfindung betrifft ein Verfahren zum Aufschäumen von schäumfähigem Polystyrol-Granulat zu aufgeschäumtem Polystyrol-Granulat durch Hitzebehandlung.

Ein solches Verfahren ist bekannt und das Aufschäumen des Granulates geschieht häufig durch Hinzufügen von heißem Dampf. Auch ein Aufschäumen im heißen Wasser ist möglich. Nachteilig ist dabei, daß in all diesen Fällen entsprechende Wärmeenergie aufgewendet werden muß.

Aus der DE-PS 14 94 955 und der DE-AS 14 94 961 ist die Herstellung von hitzebeständigen organischen Schaumstoffgebilden bekannt, bei denen ebenfalls unter Einsatz von Wasser schäumbare Kunststoffe verschäumt werden. Dabei ist wiederum die Anwendung einer bestimmten Temperatur erforderlich.

Der Erfindung liegt die Aufgabe zugrunde, ein Verfahren der eingangs erwähnten Art zu schaffen, bei welchem das Zuführen von Heißdampf oder ein sonstiges Aufheizen vermieden werden können.

Die Lösung dieser Aufgabe besteht darin, daß das Granulat mit gebranntem Kalk gemischt und dann der Kalk mit Wasser abgelöscht wird. Dabei ist es möglich, daß die Mischung aus Granulat und gebranntem Kalk einer Löschmaschine kontinuierlich zugeführt wird.

Praktisch vereinigt das erfindungsgemäße Verfahren die Herstellung von Schaumstoffkugeln aus Polystyrol und von Kalkhydrat. Dabei setzt der Vorgang des Kalklöschens so viel Wärmeenergie frei, daß ein Teil des zum Löschen gegebenen Wassers auf über 100 Grad C erwärmt und verdampft werden kann. Das heiße Wasser und der Wasserdampf reagieren mit den schäumfähigen Granulaten in der gewünschten Weise und setzen deren niedrig siedende Treibmittel frei. Dadurch wird gleichzeitig beim Löschen des Kalkes also auch das Granulat aufgeschäumt, ohne daß dazu eine eigene Energie benötigt wird. Da das Wasser durch den Löschvorgang von dem Kalk gebunden wird, kann außerdem in vorteilhafter Weise ein trockenes Endprodukt entstehen.

Es ist nun möglich, daß der gelöschte Kalk und das aufgeschäumte Polystyrol-Granulat, vorzugsweise durch Sieben, getrennt werden. Danach kann dann jeder dieser Bestandteile einer eigenen Verwertung zugeführt werden. In vorteilhafter Weise ist dabei aufgrund einer gegenseitigen Beeinflussung bei den ablaufenden Prozessen sogar eine Verbesserung dieser Prozesse möglich.

Eine Ausgestaltung der Erfindung von eigener schutzwürdiger Bedeutung kann in einem Verfahren zur Herstellung eines Bausteines bestehen. Zwar ist es aus "Kunststoffe" 1959, Seite 734, bekannt, bei der Herstellung von Leichtstoffen vorgeschäumte Styropor-Partikel und Bindemittel wie Zement, Gips und auch Kalk anzuwenden. Es ist jedoch dabei nicht vorgesehen, gebrannten Kalk abzulöschen und die dabei entstehende Wärme und die dabei zugegebene Flüssigkeit gleichzeitig zum Aufschäumen zu benutzen.

Es ist ferner bereits bekannt, Leichtbetonkörper dadurch herzustellen, daß dem Beton ein entsprechend schäumungsfähiges Kunststoffgranulat beigegeben wird, wobei dann in die Form und insbesondere in den Leichtbeton wiederum Dampf eingeleitet werden muß, um das Aufschäumen des Granulates zu erreichen. Dies ist beispielsweise in der US-PS 3 021 291 erwähnt. Eine andere Möglichkeit besteht darin, die gesamte Form für einen Leichtbetonkörper zu erhitzen, um die notwendige Wärme für das Aufschäumen des Granulates zu erzeugen. In beiden Fällen muß in nachteiliger Weise eine entsprechende Heizenergie aufgebracht werden.

Das erfindungsgemäße Verfahren zur Herstellung eines Bausteines kann dadurch gekennzeichnet sein, daß gebrannter Kalk und schäumfähiges Polystyrol-Granulat mit Sand vermischt, dann in eine Form gefüllt werden, wonach Wasser zum Löschen des Kalkes und dadurch zum Aufschäumen des Kunststoffes und zum Binden der Mischung beigefügt wird.

Zwar ist aus der DE-AS 11 97 370 und auch aus der FR-PS 1 306 582 die Herstellung von Leichtbausteinen bereits bekannt, wobei aber geblähtes Polystyrol zugegeben wird. Die Benutzung von gebranntem Kalk und schäumfähigem Polystyrol-Granulat, welche Bestandteile dann durch die Zugabe von Wasser jeweils zu den gewünschten Endprodukten als Bestandteilen eines Leichtbausteines werden, ist daraus nicht zu entnehmen. Nach einem Härtungsprozeß kann die Form des Leichtbausteines entfernt werden und es ergibt sich ein Kalksandstein, der die vorteilhaften Eigenschaften des Kalksandsteines mit guten Wärmedämmeigenschaften und einem geringen spezifischen Gewicht verbindet. Dabei kann wiederum die beim Löschen des Kalkes freiwerdende Wärme zum Aufschäumen des Poly-

0023553

styrol-Granulates ausgenutzt werden.

Eine Ausgestaltung des Verfahrens zur Herstellung eines Bausteines kann darin bestehen, daß einer Mischung aus gebranntem Kalk, schäumfähigem Polystyrol-Granulat und Sand noch Zement beigegeben wird und diese Mischung in einer Form mit Wasser versetzt wird. Dadurch läßt sich ein Baustein mit höherer Druckfestigkeit erzielen, dessen Eigenschaften praktisch zwischen denen von einem Kalksandstein und einem Leichtbetonstein liegen, der jedoch wiederum Polystyrolschaum-Granulat zur Verbesserung der Wärmedämmeigenschaften enthält, ohne daß das Aufschäumen des Polystyrol-Granulates durch Zugabe von Sand oder durch Heizen bewerkstelligt bzw. unterstützt werden muß.

Bekanntermaßen kann Polystyrol nach einer ersten Aufschäumung nochmals aufgeschäumt werden. Es ist deshalb bei dem erfindungsgemäßen Verfahren als Weiterbildung möglich, daß das schäumbare Polystyrol-Granulat ungeschäumt und/oder vorgeschäumt beigemischt wird.

Auch die Herstellung von Kalksandsteinen kann durch eine vorteilhafte Ausgestaltung der Erfindung modifiziert werden, indem eine Mischung aus Sand, Polystyrol in vorgeschäumter und/oder ungeschäumter Form sowie Weißfeinkalk in einem Mischaggregat gemischt und diese Mischung anschließend z. B. in einer Form zu Kalksandsteinen gepreßt wird. Das zum Löschen des Weißfeinkalkes und zum gleichzeitigen Aufschäumen des Polystyroles beizugebende Wasser kann also auch außerhalb der Form, aber auch in der Form beigefügt werden. Durch die Verwendung vorgeschäumten Polystyroles kann vermieden werden, daß nach dem Ablöschen noch Polystyrolteile nicht völlig aufgeschäumt sind, die bei weiteren

0023553

Prozessen eine weitere Ausdehnung erfahren und zur Zerstörung eines solchen Steines führen könnten. Bei entsprechend langer Einwirkzeit und entsprechend großer Menge des Ablöschwassers kann dies jedoch auch bei der Verwendung von zunächst ungeschäumten Polystyrol vermieden werden.

Patentanwalt

PATENTANWÄLTE

DIPL.-ING. H. SCHMITT
DIPL.-ING. W. MAUCHER

78 FREIBURG I. BR.
DREIKÖNIGSTR. 13 13. Juni 1980
TELEFON: (0761) 70773
70774

0023553

Firma

Kalkwerk Mathis GmbH & Co.

7801 Merdingen

UNSERE AKTE · BITTE STETS ANGEBEN!

E 80 279 MR

Ansprüche

1. Verfahren zum Aufschäumen von schäumfähigem Polystyrol-Granulat zu aufgeschäumten Polystyrol-Granulat durch Hitzebehandlung, d a d u r c h  g e k e n n z e i c h - n e t , daß das Granulat mit gebranntem Kalk gemischt und dann der Kalk mit Wasser abgelöscht wird.

2. Verfahren nach Anspruch 1, dadurch gekennzeichnet, daß die Mischung aus Granulat und gebranntem Kal einer Löschmaschine kontinuierlich zugeführt wird.

3. Verfahren nach Anspruch 1 oder 2, dadurch gekennzeichnet, daß der gelöschte Kalk und das aufgeschäumte Poystyrol-Granulat, vorzugsweise durch Sieben, getrennt werden.

4. Verfahren zur Herstellung eines Bausteines, dadurch gekennzeichnet, daß gebrannter Kalk und schäumfähiges Polystyrol-Granulat mit Sand vermischt, dann in eine Form gefüllt werden, wonach Wasser zum Löschen des Kalkes und dadurch zum Aufschäumen des Kunststoffes und zum Binden der Mischung beigefügt wird.

5. Verfahren nach Anspruch 4, dadurch gekennzeichnet, daß einer Mischung aus gebranntem Kalk, schäumungsfähigem Polystyrol-Granulat und Sand noch Zement beigegeben wird und diese Mischung in einer Form mit Wasser versetzt wird.

/2

6. Verfahren nach einem der Ansprüche 4 oder 5, dadurch gekennzeichnet, daß das schäumbare Polystyrol-Granulat ungeschäumt und/oder vorgeschäumt beigemischt wird.

7. Verfahren nach einem der Ansprüche 4 bis 6, dadurch gekennzeichnet, daß eine Mischung aus Sand, Polystyrol in vorgeschäumter und/oder ungeschäumter Form sowie Weißfeinkalk in einem Mischaggregat gemischt und diese Mischung anschließend z. B. in einer Form zu Kalksandsteinen gepreßt wird.

| | Europäisches Patentamt | **EUROPÄISCHER RECHERCHENBERICHT** | 0023553 |
|---|---|---|---|
| | | | EP 80103339.0 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 266 680 (BASF) + Gesamt + | 1,4-6 |
| | -- | |
| | DD - A - 63 325 (TRAUTVETTER) + Gesamt + | 1,4-6 |
| | ---- | |

**KLASSIFIKATION DER ANMELDUNG (Int. Cl.³)**

C 08 J 9/22
C 04 B 21/08
C 04 B 31/30//
(C 08 J 9/22
C 08 F 12/08)

**RECHERCHIERTE SACHGEBIETE (Int. Cl.³)**

C 08 J
C 04 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 08-10-1980 | WEIGERSTORFER |

EPA form 1503.1 06.78